(19) Europäisches Patentamt
European Patent Office
Office européen des brevets

(11) **EP 1 637 397 B2**

(12) **NOUVEAU FASCICULE DE BREVET EUROPEEN**
Après la procédure d'opposition

(45) Date de publication et mention de la décision concernant l'opposition:
**04.09.2013 Bulletin 2013/36**

(45) Mention de la délivrance du brevet:
**28.03.2007 Bulletin 2007/13**

(21) Numéro de dépôt: **05291921.4**

(22) Date de dépôt: **16.09.2005**

(51) Int Cl.:
**B60Q 1/28** *(2006.01)*     **B60Q 1/00** *(2006.01)*

(54) **Dispositif d'éclairage avec feu diurne (DRL) pour véhicule automobile**

Beleuchtungsanordnung mit Tageslicht (DRL) für Kraftfahrzeug

Lighting assembly with daytime running light (DRL) for vehicles

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.09.2004 FR 0409988**

(43) Date de publication de la demande:
**22.03.2006 Bulletin 2006/12**

(73) Titulaire: **VALEO VISION**
**93012 Bobigny Cedex (FR)**

(72) Inventeurs:
• **Pauty, Etienne**
**75019 Paris (FR)**
• **Albou, Pierre**
**75013 Paris (FR)**

(56) Documents cités:
| | |
|---|---|
| EP-A- 1 491 399 | EP-A2- 0 158 330 |
| DE-A1- 3 315 785 | DE-A1- 10 009 782 |
| DE-A1- 10 131 444 | DE-A1- 10 215 039 |
| DE-A1- 19 634 754 | DE-A1- 19 727 701 |
| DE-T2- 69 813 255 | FR-A- 2 752 911 |
| FR-A- 2 844 031 | US-A1- 2003 067 786 |
| US-A1- 2004 085 778 | |

• ' Uniform provisions concerning the approval of daytime running lamps for power-driven vehicles' AGREEMENT CONERNING THE ADOPTION OF UNIFORM CONDITIONS OF APPROVAL AND RECIPROCAL RECOGNITON OF APPROVAL FOR MOTOR VEHICLE EQUIPMENT AND PARTS no. 87, 30 Mars 1993, pages 2 - 20
• Extrait du site internet du "Lichttechnischen Instituts" (document introduit par l'opposant en tant qu'annex A3)
• K., RUMAR ET AL.: 'Purpose, effects and lighting requirements' AUTOMOBILE DAYTIME RUNNING LIGHTS (DRL) no. 3, Juillet 1990, pages 1 - 13

EP 1 637 397 B2

**Description**

La présente invention est relative à un dispositif d'éclairage et de signalisation pour véhicule automobile, susceptible de pouvoir émettre plusieurs faisceaux lumineux répondant aux différentes réglementations en vigueur.

Les dispositifs d'éclairage et de signalisation connus sont jusqu'à présent prévus pour émettre :

- un faisceau de croisement, caractérisé par une absence de lumière au dessus d'un plan incliné de 1% vers le bas du côté de la circulation dans l'autre sens, et d'un autre plan incliné de 15° par rapport au précédent du côté de la circulation dans le même sens, ces deux plans définissant une coupure conforme à la réglementation européenne ;
- un faisceau de route dépourvu de coupure, et caractérisé par un éclairement maximal dans l'axe du véhicule ;
- éventuellement un faisceau d'éclairage pour temps de brouillard, caractérisé par une coupure plate et une grande largeur d'éclairement ;
- un faisceau de signalisation pour la circulation en ville, et
- un faisceau de signalisation pour indiquer l'intention du conducteur de changer de direction ou de file de circulation.

Le document DE 100 09 782 A1 montre un dispositif selon le préambule de la revendication 1.

L'évolution des exigences en matière de signalisation des véhicules automobiles, notamment le règlement sur les feux diurnes de la Communauté Européenne intitulé "ECE regulation R87 : Daytime Running Lamp" désigné ci-après par l'abréviation DRL, pose différents problèmes en matière de réalisation d'une telle fonction DRL, imposant aux véhicules l'allumage permanent de feux de signalisation relativement puissants lors de la circulation de jour.

Une première solution admise pour assurer cette fonction DRL ou "feu diurne" consiste à allumer en permanence les feux de croisement (codes), comme les pays scandinaves le pratiquent actuellement. Toutefois, en procédant de la sorte, on augmente la consommation d'énergie de façon non négligeable, et on réduit la durée de vie des lampes. La photométrie du feu de croisement, tolérée pour cette fonction, n'est cependant pas la photométrie spécifique de la fonction DRL.

La photométrie de la fonction DRL est relativement différente de celle des autres fonctions d'éclairage assurées par les projecteurs de véhicules automobiles. En particulier, le faisceau DRL doit être relativement épais suivant l'axe optique, avec une intensité lumineuse sensiblement plus faible que pour les feux de route ou de croisement.

Il est possible de prévoir un feu diurne DRL spécifique, mais dans ce cas il faut ajouter à l'avant du véhicule, par exemple dans le bouclier, une cavité abritant cette fonction et respectant le règlement R87. Actuellement, la surface éclairante exigée pour la fonction DRL est de 40 cm$^2$ et il n'est pas toujours aisé dans les véhicules modernes de trouver un emplacement pour une telle surface éclairante.

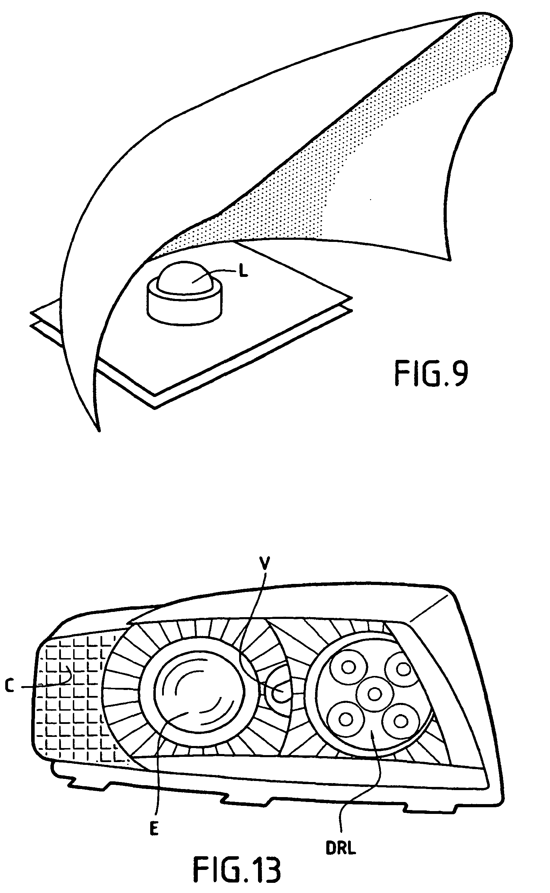

On a représenté par exemple schématiquement sur la Figure 13 un exemple de projecteur pour véhicule automobile, dans lequel on a cherché à intégrer tous les modules d'éclairage et de signalisation réglementaires. Le projecteur comporte ainsi :

- un module elliptique E, équipé d'un cache escamotable de manière à pouvoir émettre sélectivement un faisceau route ou un faisceau de croisement,
- un module indicateur de changement de direction C,
- une lampe de signalisation pour la circulation en ville V, et
- un module pour la circulation diurne DRL, réalisé dans cet exemple à l'aide de plusieurs diodes électroluminescentes.

On voit que les diverses exigences pour la fonction DRL apparaissent donc difficiles à concilier avec les autres fonctions classiques d'un projecteur de véhicule automobile. Dans l'exemple de la Figure 13 par exemple, le module dédié à l'émission d'un faisceau antibrouillard devra être repoussé dans le bouclier du véhicule, le projecteur ne pouvant l'accueillir.

On peut d'autre part noter qu'il n'est pas directement possible d'obtenir un faisceau remplissant la fonction DRL réglementaire en sous-alimentant un projecteur fournissant un faisceau route et un faisceau de croisement, en raison des rapports entre les intensités aux différents points de mesure de la grille photométrique réglementaire. Par exemple, en ce qui concerne le faisceau de route, les rapports entre l'intensité lumineuse dans l'axe du véhicule à celles des points latéraux sont très supérieurs à ceux autorisés pour un faisceau DRL aux mêmes points.

La présente invention se place dans ce contexte et a pour but de proposer un dispositif d'éclairage et de signalisation, notamment pour véhicule automobile, qui puisse fournir, en plus des faisceaux réglementaires de croisement, de route, et de signalisation habituels, un faisceau DRL pour la circulation diurne, lui aussi conforme à la réglementation en la matière, et qui soit d'un encombrement acceptable et d'un coût réduits pour le constructeur de véhicules tout en respectant les contraintes imposées par les stylistes.

Dans ce but, l'invention a pour objet un dispositif d'éclairage et de signalisation selon la revendication 1.

Selon d'autres caractéristiques avantageuses et non limitatives de l'invention :

- la couleur des faisceaux est celle qui est émise directement par les sources lumineuses.
- la couleur des faisceaux est celle qui est transmise par des filtres colorés disposés devant les sources lumineuses

- les sources lumineuses participant à l'élaboration du premier faisceau sont de couleurs différentes.

- les sources lumineuses participant à l'élaboration du deuxième faisceau sont de couleurs différentes

D'autres buts, caractéristiques et avantages de la présente invention ressortiront clairement de la description qui va maintenant être faite d'un exemple de réalisation donné à titre non limitatif en référence aux dessins annexés sur lesquels :

- la Figure 1 représente schématiquement un premier mode de réalisation de la présente invention ;

- la Figure 2 représente schématiquement une variante du mode de réalisation de la figure 1 ;

- la Figure 3 représente schématiquement un deuxième mode de réalisation non couvert par la présente invention ;

- la Figure 4 illustre une méthode de construction d'un réflecteur pouvant être utilisé dans le mode de réalisation de la Figure 3 ;

- la Figure 5 représente la loi $\alpha$ $(\theta)$, paramètre de construction de G utilisée pour la méthode de la Figure 4

- les Figures 6 et 7 représentent une coupe verticale du réflecteur construit à l'aide de la méthode de la Figure 4 ;

- la Figure 8 représente la loi $\beta$ $(\Gamma)$, paramètre de construction de la courbe servant à construire le cylindre dont on voit la trace sur la Figure 4.

- la Figure 9 représente une vue en perspective du réflecteur obtenu à l'aide de la méthode illustrée aux Figures 4 à 8 ;

- les Figures 10 à 12 représentent l'allure de faisceaux lumineux obtenus, et

- la Figure 13 déjà décrite représente un projecteur de la technique antérieure dans lequel on a cherché à intégrer tous les modules d'éclairage et de signalisation réglementaires, y compris la fonction DRL.

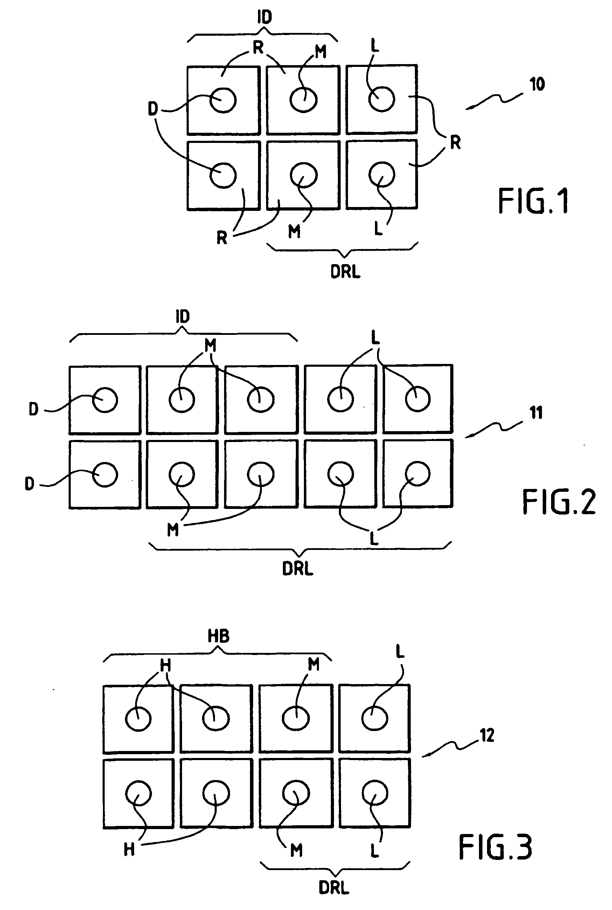

On a représenté schématiquement sur la Figure 1 en vue de face un dispositif d'éclairage et de signalisation selon la présente invention, désigné dans son ensemble par la référence 10, et destiné à être disposé à l'avant d'un véhicule, qui est normalement équipé de deux de ces dispositifs, disposés symétriquement par rapport à l'axe longitudinal du véhicule.

Le dispositif 10 comporte des premières sources lumineuses L, dédiées à la formation d'un faisceau lumineux pour une première fonction, c'est-à-dire la fonction DRL, et des deuxièmes sources lumineuses D, dédiées à la formation d'un faisceau lumineux pour une deuxième fonction, c'est-à-dire la fonction indicateur de changement de direction. Les sources lumineuses D ou L pourront par exemple être constituées de diodes électroluminescentes.

Comme on l'a représenté schématiquement, chaque source lumineuse D

ou L est associée à un réflecteur R, de manière à recueillir le maximum de la lumière émise par la source D ou L, et à la renvoyer vers l'avant du véhicule pour contribuer à former le faisceau lumineux possédant la photométrie voulue.

Conformément à la présente invention, il est prévu de munir le dispositif 10 de troisièmes sources lumineuses M, elles aussi associées chacune à des réflecteurs R. Ces troisièmes sources sont mixtes, c'est-à-dire qu'elles ne sont pas dédiées à une fonction particulière.

Dans l'exemple représenté sur la Figure 1, où les premières sources lumineuses L sont affectées à la première fonction d'éclairage pour une circulation diurne, et où les deuxièmes sources lumineuses D du dispositif 10 sont affectées à la deuxième fonction d'indication de changement de direction, les troisièmes sources M vont être affectées à l'une ou à l'autre de ces premières ou deuxième fonctions.

De manière plus précise, pour réaliser la fonction DRL, la réglementation R87 impose une plage éclairante de surface minimale de 40 cm$^2$. Selon l'invention, on prévoit que cette surface soit obtenue par l'ensemble des sources lumineuses L et M. De même, pour assurer la fonction indication de changement de direction, on prévoit que cette fonction soit obtenue par l'ensemble des sources lumineuses D et M.

Selon la réglementation en vigueur, la fonction indication de changement de direction ID est assurée par un faisceau lumineux dont la couleur dominante est la couleur ambre, alors que la fonction DRL devra être assurée par un faisceau lumineux dont la couleur dominante sera la couleur blanche. Pour la fonction indication de changement de direction ID, la couleur ambre pourra indifféremment être obtenue soit à l'aide de sources colorées, que ce soient des ampoules à incandescence dont le bulbe est teinté ou des diodes électroluminescentes émettant directement de la lumière ambre, soit à l'aide de sources de lumière blanche - à incandescence ou diodes électroluminescentes - devant lesquelles un système dioptrique coloré de couleur ambre aura été disposé.

L'invention repose sur le fait qu'il est possible, en allumant n sources de couleur ambre en même temps que m sources de couleur blanche, d'obtenir un faisceau résultant de couleur ambre ou blanche. Les valeurs de n et m dépendent de plusieurs facteurs, et en particulier :

- du type de sources lumineuses,

- de la surface réglementaire de la couleur blanche dans le plan xy des coordonnées trichromatiques de la CIE (Commission Internationale de l'Éclairage)

- de la couleur résultante souhaitée.

En particulier, du fait que la surface réglementaire de la couleur blanche dans le plan xy des coordonnées trichromatiques de la CIE, donc dédiée à la fonction DRL, est notablement plus importante que la surface réglementaire de la couleur ambre dans le plan xy des coordonnées trichromatiques de la CIE, donc dédiée à la fonction indication de changement de direction, le compromis entre les valeurs n et m est relativement facile à déterminer. En revanche, la combinaison inverse (utilisation de sources blanches dans une fonction réglementairement ambre), n'est possible que lorsque le rapport du flux des sources blanches au flux de la fonction ambre est très faible.

Par exemple, diverses configurations permettent de satisfaire les réglementations relatives à la fonction indication de changement de direction ID et à la fonction DRL réalisées avec des sources lumineuses communes.

Selon un premier exemple, représenté sur la Figure 1, les sources lumineuses D sont au nombre de deux, les sources lumineuses M sont également au nombre de deux, et elles sont toutes de couleur ambre, tandis que les sources lumineuses L, également au nombre de deux, sont de couleur blanche.

Dans la présente description, une source lumineuse est qualifiée être d'une couleur déterminée, selon la couleur émise finalement. Ainsi, une source lumineuse est dite « ambre » si la lumière émergeant de cette source est elle-même de couleur ambre, que la source lumineuse émette directement cette couleur ou qu'un système dioptrique coloré de couleur ambre lui soit associé.

Dans l'exemple de la Figure 1, la fonction indication de changement de direction ID est ainsi obtenue par l'allumage des quatre sources ambre D et M, ce qui permet d'obtenir un faisceau lumineux conforme à la réglementation pour cette fonction. De même, la fonction DRL sera obtenue par l'allumage des deux sources blanches L et des deux sources ambre M. L'expérience a montré qu'une telle association permet d'obtenir un faisceau lumineux conforme à la réglementation pour la fonction DRL, aussi bien en ce qui concerne la couleur résultante du faisceau total émis qu'en ce qui concerne la grille photométrique à remplir.

Selon un deuxième exemple de dispositif d'éclairage ou de signalisation 11, représenté sur la Figure 2,

- les sources lumineuses D sont au nombre de deux, elles sont de couleur ambre,
- les sources lumineuses L sont au nombre de quatre, de couleur blanche, et
- les sources lumineuses M sont au nombre de quatre, de couleur ambre.

Dans cet exemple, la fonction indication de changement de direction ID est ainsi obtenue par l'allumage des six sources ambre D et M, ce qui permet là encore d'obtenir un faisceau lumineux conforme à la réglementation pour cette fonction. De même, la fonction DRL sera obtenue par l'allumage des quatre sources blanches L et des quatre sources ambre M. L'expérience a encore montré qu'une telle association permet là encore d'obtenir un faisceau lumineux conforme à la réglementation pour la fonction DRL, aussi bien en ce qui concerne la couleur résultante du faisceau total émis qu'en ce qui concerne la grille photométrique à remplir.

De manière à ce que les deux fonctions de signalisation, à savoir indication de changement de direction et circulation diume aient la meilleure visibilité possible, on pourra par exemple prévoir que, lorsqu'on désire activer la fonction indication de changement de direction,

- d'une part les sources lumineuses L, affectées à une partie de la fonction DRL, soient éteintes et
- d'autre part que seules soient allumées, de manière intermittente, les sources D et M, pour signaler l'intention du conducteur de changer de direction, de manière à ce que les allumages et extinctions successifs de ces sources D et M soient parfaitement perceptibles des autres conducteurs.

Bien entendu, on pourra choisir d'autres combinaisons du nombre n de sources de couleur ambre et du nombre m de sources de couleur blanche, permettant d'obtenir un faisceau résultant de couleur ambre ou blanche.

On a donc bien réalisé selon la présente invention un dispositif d'éclairage et de signalisation, qui peut fournir deux faisceaux réglementaires, dont un faisceau dédié à la fonction de circulation diurne, dont l'encombrement est réduit grâce à l'utilisation des mêmes sources lumineuses pour remplir deux fonctions distinctes.

Une autre solution non couverte par l'invention pour résoudre le même problème, à savoir réaliser un dispositif d'éclairage et de signalisation qui puisse fournir en plus des faisceaux réglementaires d'éclairage et de signalisation habituels, un faisceau DRL pour la circulation diurne, lui aussi conforme à la réglementation, et qui soit d'un encombrement et d'un coût réduits, peut résider dans le mode de réalisation qui suit.

On sait réaliser des projecteurs fournissant un faisceau réglementaire de route, à l'aide de plusieurs modules dont les sources lumineuses sont des diodes électroluminescentes. On pourra se reporter par exemple à la demande de brevet FR 04 01 489 déposée le 13 février 2004 par la Demanderesse et exposant la réalisation de tels projecteurs.

On peut dès lors réaliser un projecteur réalisant à la fois les fonctions faisceau de route et feu de circulation diurne, en utilisant plusieurs sources lumineuses, certaines étant dédiées uniquement à la formation du faisceau de route, certaines étant dédiées uniquement à la formation d'un faisceau DRL, et certaines sources étant utilisées pour la formation de l'un ou l'autre de ces faisceaux.

On a représenté schématiquement sur la Figure 3 en vue de face un dispositif d'éclairage et de signalisation selon un deuxième mode de réalisation non couverte par la présente invention, désigné dans son ensemble par la référence 12, qui comporte des premières sources lumineuses H, par exemple au nombre de quatre, et dédiées à la formation d'un faisceau lumineux pour une première fonction HB, par exemple la fonction faisceau de route, et des deuxièmes sources lumineuses L, au nombre de deux, et dédiées à la formation d'un faisceau lumineux pour une deuxième fonction, par exemple la fonction DRL. Les sources lumineuses H ou L seront dans ce mode de réalisation constituées de préférence par des diodes électroluminescentes, associées à des réflecteurs tels que ceux qui sont décrits dans le document précité de manière à former des modules élémentaires.

Comme dans le mode de réalisation précédent, le dispositif d'éclairage et de signalisation 20 est muni de troisièmes sources lumineuses M mixtes, par exemple au nombre de deux, c'est-à-dire qu'elles ne sont pas dédiées exclusivement à l'une de ces fonctions.

Pour réaliser un faisceau d'éclairage de route, par exemple les quatre sources H et les deux sources M sont allumées, comme l'enseigne le document précité.

Pour réaliser un faisceau de circulation diurne, on allume, à la puissance adéquate, au moins une des sources M réalisant une partie du faisceau route de façon à réaliser la partie centrale la plus proche de l'axe optique de la photométrie du faisceau DRL avec les points de la grille photométrique du faisceau route qui sont les plus intenses.

De manière générale, si on utilise un projecteur de faisceau de route dont les sources lumineuses sont des diodes électroluminescentes, et dont l'encombrement a été réduit au maximum par le choix d'une longueur focale courte, et dont le faisceau a été optimisé pour éviter de la lumière sensiblement en dessous de l'horizontale, on obtient alors beaucoup de lumière montante et le faisceau de route peut participer notablement à la réalisation de la photométrie du faisceau DRL.

La photométrie du ou des modules routes alimentés sous une puissance inférieure à leur puissance nominale est facilement calculable en assurant, par exemple, que dans l'axe, il ou ils émettent 80% de l'intensité désirée pour le faisceau DRL. De cette manière, on en déduit facilement le faisceau complémentaire minimal à réaliser par le ou les modules L pour obtenir un faisceau résultant conforme à la réglementation au règlement DRL, et on détermine les valeurs maximales à ne pas dépasser.

Cette approche offre l'avantage que le faisceau complémentaire nécessite nettement moins de flux lumineux que s'il s'agissait de réaliser un faisceau pour une fonction DRL en tant que telle, du fait qu'une partie de ce faisceau est déjà réalisée par les modules participant à l'élaboration du faisceau de route, allumés à une puissance moindre que leur puissance nominale.

En outre, la surface éclairante minimale réglementaire de la fonction DRL est atteinte grâce à une partie de la surface de la fonction route, ce qui minimise la surface frontale totale occupée par ces deux fonctions.

Le deuxième mode de réalisation consiste donc à associer à des modules dédiés à la formation d'un faisceau de route, utilisés à une puissance inférieure, un ou plusieurs modules spécifiques complémentaires et optimisés pour réaliser exactement le faisceau DRL désiré.

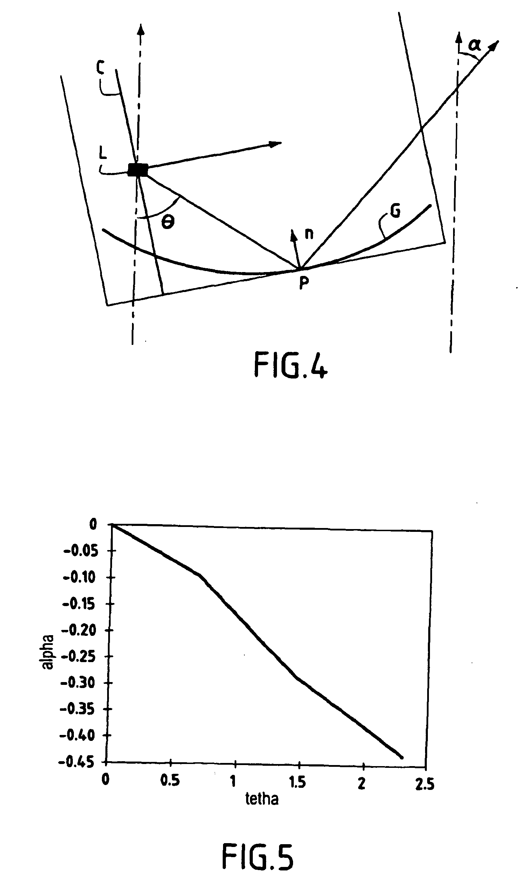

Le réflecteur d'un tel module spécifique complémentaire est calculé par exemple de la manière suivante, décrite en relation avec la Figure 4.

Etant donnée la source lumineuse constituée de la diode électroluminescente L, on construit une courbe G située dans un plan horizontal. Pour chaque point P de cette courbe, on détermine un cylindre tangent à la courbe comme on va l'indiquer plus bas, et on prend l'enveloppe intérieure de cette famille de cylindres.

La courbe G est facilement calculée à partir de la donnée d'une distance entre la source L et le sommet, et de $\alpha(\theta)$, qui constitue un paramètre de réglage de la répartition horizontale. De préférence, pour $\theta > 0$, $\alpha(\theta)$ <0 , en tenant compte des orientations des angles indiquées sur la Figure 4. Cela revient à préférer un système convergent, qui est moins encombrant pour un même angle solide du réflecteur, vu depuis la source (et donc un même flux capté).

La valeur maximale de $\theta$ n'est limitée que par l'encombrement acceptable et la possibilité de démouler le réflecteur complet. L'angle $\alpha$ doit parcourir (au moins une fois) toutes les valeurs possibles des angles horizontaux du champ réglementaire du faisceau DRL (de -20° à +20°) et, de préférence, couvrir un champ un peu plus grand. La demi-courbe représentant $\alpha(\theta)$ dans cet exemple est représentée sur la Figure 5, l'autre demi-courbe étant symétrique par rapport à un plan vertical contenant l'axe optique.

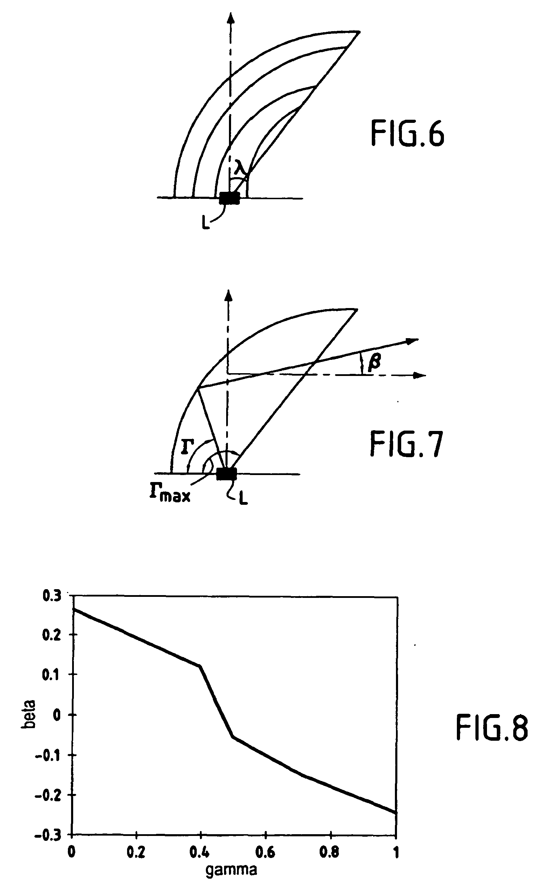

La surface globale étant volontairement limitée par un plan incliné d'un angle $\lambda$ (voir Figure 6), qui représente un paramètre de conception permettant de limiter l'encombrement suivant l'axe optique, on voit facilement que les coupes C ont, lorsque $\theta$ croît, une hauteur de plus en plus faible et, pour $\theta > \pi/2$, un premier point utile situé au dessus de l'horizontale, comme indiqué ci-dessous.

Les coupes C sont les génératrices des cylindres représentés sur la Figure 4, intersections des cylindres avec un plan vertical passant par le centre de la source et parallèle à la normale à G au point de construction considéré P.

Si on se place dans le plan d'une des coupes C, on construit cette coupe C facilement à partir de la donnée de $\beta(\gamma)$ : la distance source sommet se déduit de la courbe G, dans le plan horizontal contenant la source :

$$\gamma = \frac{\Gamma - \Gamma_0}{\Gamma_{max} - \Gamma_0}$$

où : $\Gamma_0 > 0$ pour $\theta > \pi/2$,

$\Gamma_0 = 0$ pour $\theta < \pi/2$

$\Gamma_{max}$ dépend de $\theta$

ce que l'on a représenté sur la Figure 7.

L'angle $\beta$ doit parcourir (au moins une fois) toutes les valeurs possibles des angles verticaux du champ réglementaire du faisceau DRL, pour la valeur de l'angle horizontal $\alpha(\theta)$ correspondant à la coupe C considérée (de -10° à +10° si $\alpha(\theta)$ <5° ou de -5° à +5° si $\alpha(\theta)$ >5°), et, de préférence, couvrir un champ un peu plus grand.

De préférence, $\beta(0)$ >0 et, mieux, $\beta(0) = \beta_{max}$ de manière à ce que les rayons provenant du réflecteur dans le plan horizontal contenant la source passent au dessus de la diode et des obstacles potentiels tels que des fixations.

C'est le choix judicieux de $\beta(\gamma,\theta)$ qui permet d'optimiser le faisceau, et par exemple de créer les « trous » dans la répartition photométrique. Par exemple :

- pour $\theta$ < 27°, on pourra choisir une relation entre $\beta$ et $\theta$ qui sera de la forme représentée sur la Figure 8, et
- pour $\theta$ > 27°, la relation pourra être de la forme : $\beta$ =10°(1- 2y)

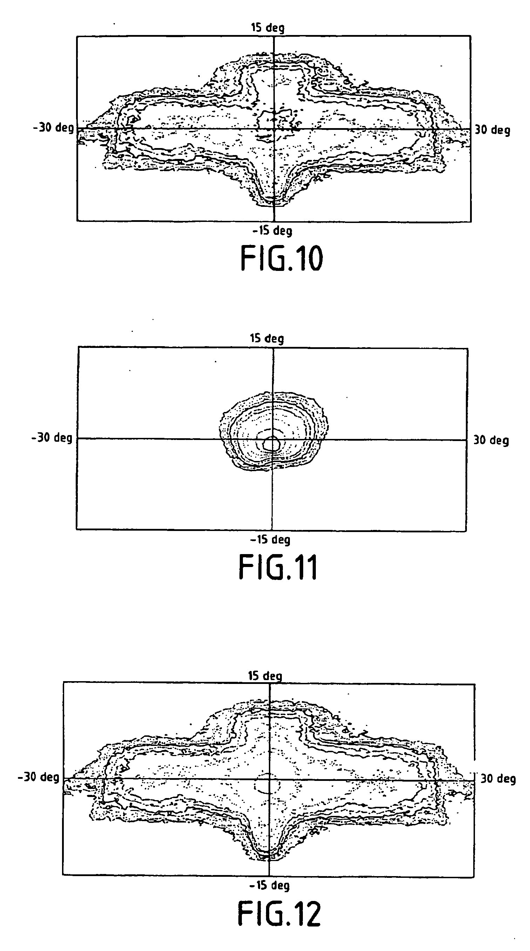

On obtient alors un réflecteur représenté en perspective sue la Figure 9, le faisceau résultant d'une telle conception étant représenté sur la Figure 10. Si à ce faisceau on superpose le faisceau d'un module dédié à un faisceau de route, mais alimenté à une puissance inférieure à sa puissance nominale, de sorte par exemple que le flux émis soit abaissé de 68 lm à 9,5 lm, et représenté par exemple sur la Figure 11, on obtiendra un faisceau final tel que celui qui est représenté sur la Figure 12, en tous points conforme à la réglementation concernant les faisceaux DRL.

Bien entendu, d'autres principes optiques s'appliqueraient également aisément, par exemple des bonnettes de type catadioptrique ou des réflecteurs à facettes pour obtenir le même résultat.

La conception qui vient d'être décrite, pour obtenir un faisceau DRL avec une partie des sources lumineuses utilisées pour le faisceau de route sous alimentées et au moins un module complémentaire adapté pour compléter cette fonction, peut être mise en oeuvre en utilisant une partie des sources lumineuses dédiées à la fonction faisceau de croisement, il est alors possible de diminuer encore le flux requis dans le faisceau complémentaire, les modules pour le faisceau de croisement allumés créant un partie de la photométrie du faisceau DRL.

On a donc bien réalisé selon la présente invention un dispositif d'éclairage et de signalisation, qui peut fournir deux faisceaux réglementaires, dont un faisceau dédié à la fonction de circulation diurne, l'autre faisceau étant un faisceau de signalisation de changement de direction, ce dispositif d'éclairage ou de signalisation ayant un encombrement réduit grâce à l'utilisation des mêmes sources lumineuses pour remplir deux fonctions distinctes.

Bien entendu, la présente invention n'est pas limitée aux modes de réalisation qui ont été décrits, mais l'homme du métier pourra au contraire lui apporter de nombreuses modifications qui rentrent dans son cadre.

**Revendications**

1. Dispositif d'éclairage et de signalisation (10, 11, 12) pour véhicule automobile, comportant au moins une première et au moins une deuxième source lumineuse (D, L) associée chacune à un système optique (R) pour produire au moins un premier et un deuxième faisceaux lumineux (ID, HB, DRL) conformes à des réglementations préétablies, le premier faisceau lumineux (DRL) est un faisceau pour circulation diurne (DRL), ledit dispositif comporte au moins une troisième source lumineuse (M) participant à la formation du deuxième faisceau lumineux (ID, HB) qui est également utilisée pour former le premier faisceau lumineux (DRL), **caractérisé en ce que** le deuxième faisceau (ID) est un faisceau d'indication de changement de direction, et **en ce que** les premier et deuxième faisceaux (ID, HB, DRL) ont des couleurs différentes.

2. Dispositif d'éclairage et de signalisation selon la revendication 1, **caractérisé en ce que** la couleur des faisceaux est celle qui est émise directement par les sources lumineuses.

3. Dispositif d'éclairage et de signalisation selon la revendication 1, **caractérisé en ce que** la couleur des faisceaux est celle qui est transmise par des systèmes dioptriques colorés disposés devant les sources lumineuses.

4. Dispositif d'éclairage et de signalisation selon l'une des revendications 2 ou 3, **caractérisé en ce que** les sources lumineuses participant à l'élaboration du premier faisceau (DRL) sont de couleurs différentes.

5. Dispositif d'éclairage et de signalisation selon l'une des revendications 2 ou 3, **caractérisé en ce que** les sources lumineuses participant à l'élaboration du deuxième faisceau (ID) sont de couleurs différentes.

**Patentansprüche**

1. Beleuchtungs- und Signalgebungsvorrichtung (10, 11, 12) für Kraftfahrzeuge, mit wenigstens einer ersten und wenigstens einer zweiten Lichtquelle (D, L), die jeweils einem optischen System (R) zugeordnet ist, um wenigstens ein erstes und ein zweites Lichtbündel (ID, HB, DRL) zu erzeugen, das festgesetzten gesetzlichen Vorschriften entspricht, das erste Lichtbündel (DRL) ist ein Tagfahrlicht (DRL), und besagte Vorrichtung weist eine dritte an der Bildung des zweiten Lichtbündels (ID, HB) mitwirkende Lichtquelle (M) auf, die ebenfalls zum Bilden des ersten Lichtbündels (DRL) verwendet wird **dadurch gekennzeichnet, dass** das zweite Lichtbündel (ID) ein Lichtbündel zur Fahrtrichtungsanzeige ist und, dass das erste und das zweite Lichtbündel (ID, HB, DRL) unterschiedliche Farben haben.

2. Beleuchtungs- und Signalgebungsvorrichtung nach Anspruch 1, **dadurch gekennzeichnet, dass** es sich bei der Farbe der Lichtbündel um die durch die Lichtquellen unmittelbar ausgestrahlte Farbe handelt.

3. Beleuchtungs- und Signalgebungsvorrichtung nach Anspruch 1, **dadurch gekennzeichnet, dass** es sich bei der Farbe der Lichtbündel um die Farbe handelt, die durch vor den Lichtquellen angeordnete farbige dioptrische Systeme übertragen wird.

4. Beleuchtungs- und Signalgebungsvorrichtung nach einem der Ansprüche 2 oder 3, **dadurch gekennzeichnet, dass** die an der Bildung des ersten Lichtbündels (DRL) mitwirkenden Lichtquellen unterschiedliche Farben haben.

5. Beleuchtungs- und Signalgebungsvorrichtung nach einem der Ansprüche 2 oder 3, **dadurch gekennzeichnet, dass** die an der Bildung des zweiten Lichtbündels (ID) mitwirkenden Lichtquellen unterschiedliche Farben haben.

## Claims

1. Lighting and signalling device (10, 11, 12) for a motor vehicle, comprising at least one first and at least once second light source (D, L), each associated with an optical system (R) in order to product at least one first and one second light beam (ID, HB, DRL) in conformity with pre-established regulations, the first light beam (DRL) is a beam for daytime travel (DRL), and said device comprises at least one third light source (M) which participates in the formation of the second light beam (ID, HB) which is also used to form the first light beam (DRL) **characterised in that** the second beam (ID) is a beam to indicate a change of direction **and in that** the first and second beams (ID, HB, DRL) have different colours.

2. Lighting and signalling device according to claim 1, **characterised in that** the colour of the beams is that which is emitted directly by the light sources.

3. Lighting and signalling device according to claim 1, **characterised in that** the colour of the beams is that which is transmitted by colour dioptric systems which are disposed in front of the light sources.

4. Lighting and signalling device according to claim 2 or claim 3, **characterised in that** the light sources which participate in production of the first beam (DRL) are of different colours.

5. Lighting and signalling device according to claim 2 or claim 3, **characterised in that** the light sources which participate in production of the second beam (ID) are of different colours.

FIG.1

FIG.2

FIG.3

FIG.4

FIG.5

FIG.6

FIG.7

FIG.8

FIG.9

FIG.13

15 deg

-30 deg                  30 deg

-15 deg

## FIG.10

15 deg

-30 deg                  30 deg

-15 deg

## FIG.11

15 deg

-30 deg                  30 deg

-15 deg

## FIG.12

**EP 1 637 397 B2**

## RÉFÉRENCES CITÉES DANS LA DESCRIPTION

**Documents brevets cités dans la description**

- DE 10009782 A1

- FR 0401489